# EUROPÄISCHE PATENTSCHRIFT

(11) **EP 3 716 178 B1**
(45) Veröffentlichungstag und Bekanntmachung des Hinweises auf die Patenterteilung: **04.06.2025**
(21) Anmeldenummer: 20164921.7
(22) Anmeldetag: 23.03.2020
(51) Int. Cl.: G06Q 10/10

(54) **VERFAHREN UND VORRICHTUNG ZUR AUTOMATISCHEN ÜBERWACHUNG VON TELEFONATEN**
METHOD AND DEVICE FOR AUTOMATED MONITORING OF TELEPHONE CALLS
PROCÉDÉ ET DISPOSITIF DE SURVEILLANCE AUTOMATIQUE DES APPELS TÉLÉPHONIQUES

(30) Priorität: 29.03.2019 DE 102019108178
(43) Veröffentlichungstag der Anmeldung: 30.09.2020
(73) Patentinhaber: Tribe Technologies GmbH, 60439 Frankfurt am Main (DE)
(72) Erfinder: Häferer, Andreas, 64546 Mörfelden-Walldorf (DE); Reddehase, Axel, 60431 Frankfurt am Main (DE)
(74) Vertreter: WSL Patentanwälte Partnerschaft mbB

(56) Entgegenhaltungen:
- WO-A1-2012/162009
- US-A1- 2011 218 798
- US-A1- 2019 013 038

## Beschreibung

Die Erfindung betrifft ein Verfahren und eine Vorrichtung zur automatischen Überwachung von Telefonaten mit mindestens zwei Gesprächspartnern.

Viele Unternehmen oder Organisationen besitzen interne Callcenter oder nehmen die Dienstleistungen von externen Callcentern in Anspruch. Solche Callcenter beschäftigen eine Vielzahl von Agenten, die Telefonanrufe oder andere Anfragen beantworten, beispielsweise von Kunden oder potentiellen Kunden. Callcenter haben in der Regel eine Reihe von Aufgaben umfassend beispielsweise die Annahme von Aufträgen für die Lieferung von Waren oder Dienstleistungen, die Information über Waren oder Dienstleistungen, die Annahme von Beschwerden oder Anregungen von Kunden, die Verteilung von Informationen, auch in technischer Hinsicht, um die Kunden in der Auswahl oder der Benutzung der Waren oder Dienstleistungen zu unterstützen, und dergleichen. Die Arbeit der internen oder externen Callcenter ist in vielen Branchen äußerst wichtig für diese Unternehmen oder Organisationen, da deren geschäftlicher Erfolg häufig zumindest teilweise von der Arbeit dieser Callcenter abhängt. Daher streben die Callcenter-Manager eine ständige Erhöhung der Callcenter-Performance an. Das nachfolgend beschriebene Verfahren bzw. Vorrichtung soll z.B. Callcenter-Manager darin unterstützen, die Qualität der Arbeit von Agenten, insbesondere im Rahmen von Telefonaten mit Kunden, besser einzuschätzen. WO 2012/162009 offenbart ein Verfahren Elemente in einem Gespräch zum Zwecke des Schutzes der Privatsphäre zu verschleiern. US 2019/013038 offenbart einen Echtzeitfilter zur Wahrung der Privatsphäre. US 2011/218798 offenbart ebenso ein Verfahren Elemente in einem Gespräch zum Zwecke des Schutzes der Privatsphäre zu verschleiern.

In den folgenden Ausführungen wird als ein Telefonat eine Übermittlung von Audiodaten-Signalen, die Sprache, Musik oder sonstige Geräusche beinhalten, zwischen mindestens zwei Gesprächspartnern definiert. Im Zusammenhang mit einem Telefonat können zusätzlich auch Videodaten oder andere Daten zwischen den mindestens zwei Gesprächspartnern übermittelt werden.

Jedes Audiodaten-Signal ist bei seiner Entstehung durch und/oder bei einem Gesprächspartner zunächst ein analoges Signal in Form eines zeitlich veränderlichen Schalldrucks, welches die Audioinformation, nämlich die gesprochene Information und/oder Musikinformation und/oder sonstige Geräuschinformation, trägt.

In Bezug auf die bei einem Telefonat entstehenden Audiodaten-Signale der mindestens zwei Gesprächspartner ist es bereits bekannt, jedes zunächst analog vorliegende Audiodaten-Signal mittels Quantisierung/Abtastung zu digitalisieren und mittels sogenannter Codecs zu komprimieren (z.B. für VoIP, ISDN), um die Übermittlung und Weiterverarbeitung der Audiodaten zu ermöglichen. Hierfür wird das analoge Audiodaten-Signal des jeweiligen Gesprächspartners, das einen bestimmten Schalldruck-Pegelverlauf und Frequenzverlauf beinhaltet, derart komprimiert, dass ein digitales Audiodaten-Signal mit aneinander gereihten digitalen Audiodatenpaketen entsteht. Jedes Audiodatenpaket weist eine vorgegebene Anzahl BL von Bytes (z.B Bytelänge BL = 160) und/oder eine vorgegebene Länge L in zeitlicher Hinsicht auf (z.B. Länge L <= 100 ms, beispielsweise 20 ms), wobei jedem Byte des digitalen Audiodatenpakets eine Pegelhöhe zugeordnet ist. Beispielsweise kann eine solche Pegelhöhe zwischen -127 und +128 oder zwischen 0 und 255 liegen. Die Audiodatenpakete eines Audiodaten-Signals können jeweils die gleiche oder unterschiedliche zeitliche Länge L und/oder jeweils die gleiche oder unterschiedliche Anzahl von Bytes aufweisen. Ein derart komprimiertes digitales Audiodaten-Signal trägt weiterhin eine Audioinformation, die jedoch gegenüber der Audioinformation des analogen Signals bereits reduziert ist. Beispielsweise sind für den Menschen nicht oder sehr schwer hörbare Teile der Audioinformation des analogen Audiodaten-Signals in dem komprimierten digitalen Audiodaten-Signal nicht mehr enthalten.

In vielen Ländern ist eine Aufzeichnung von Telefonaten nicht erlaubt, da das nicht öffentlich gesprochene Wort einem besonderen Schutz unterliegt, dessen Nichtbeachtung teilweise strafrechtlich verfolgt wird. Zudem unterliegen die gesprochenen Informationen und deren Umstände dem Datenschutz.

Callcenter-Manager und andere Entscheidungsträger besitzen häufig nur wenige Informationen über die Qualität der Arbeit der Agenten bzw. des automatischen Anrufmanagement-Programms. Um die Arbeit der Agenten genauer zu überwachen, Fehler oder Schulungsbedarf zu erkennen bzw. die Erfüllung von vertraglichen Vorgaben durch externe Callcenter zu kontrollieren, müssten Telefonate zwischen dem oder den Agenten und dem mindestens einen Kunden aufgezeichnet werden, was jedoch aufgrund des oben geschilderten Schutzes des gesprochenen Worts nicht gestattet ist. Aufgrund der gesetzlichen Vorgaben ist es nicht möglich, eine grundsätzliche Aufzeichnungserlaubnis z.B. im Rahmen eines AGB einzuholen. Aufgezeichnete Telefonate könnten einer Vorfall- und Aktionserkennung unterzogen werden, wie dies in den Dokumenten US 8,885,798 B2 oder US 8,102,973 B2 beschrieben wird. Alternativ könnten vorgegebene linguistikbasierte psychologische Verhaltensmodelle für die Qualitätsüberwachung herangezogen werden, was in der Druckschrift WO 2006/124945 A1 beschrieben wird. Die Anwendung derartiger Verfahren zur Qualitätssicherung ist somit problematisch.

In der Druckschrift US 2011/0218798 A1 wird eine Methode offenbart, um sensible Inhalte einer Audio-Quelle, welche die Interaktion zwischen einem Callcenter-Anrufer und einem Callcenter-Agenten darstellen, unkenntlich zu machen. Die Methode umfasst eine Analyse von Audiodaten in Bezug auf Segmente mit sensiblen Inhalten und eine Verschleierung von sensiblen Inhalten durch Reduzierung der Lautstärke, Maskierung der Inhalte oder Editierung der Inhalte.

Eine Methode zur Verschlüsselung für schnurlose Telefonsysteme mit Hilfe der Verschlüsselungsalgorithmen CMEA und ECMEA wird in der Druckschrift DE 698 27 917 T2 offenbart. Das hier beschriebene Verschlüsselungsverfahren umfasst ein Vorwärts-ECMEA-Verfahren, wodurch Informationen verschlüsselt werden, und ein Rückwärts-ECMEA-Verfahren, wodurch verschlüsselte Informationen wieder entschlüsselt werden und umgekehrt. Eine Iteration des CMEA-Algorithmus beinhaltet Transformationen, die eine zufällige Byte-Permutation durchführen.

Daher suchen Anbieter von Callcenter-Systemen nach alternativen Möglichkeiten zur Überwachung der Callcenter-Performance.

Die Aufgabe besteht somit darin, ein Verfahren anzugeben bzw. eine Vorrichtung zu schaffen, die eine einfache automatische Überwachung der Callcenter-Performance ermöglicht, und zwar ohne gegen gesetzliche Vorgaben zu versto-ßen.

Die obige Aufgabe wird durch das Verfahren mit den Merkmalen des Anspruchs 1 und die Vorrichtung mit den Merkmalen des Anspruchs 9 gelöst.

Insbesondere wird bei dem erfindungsgemäßen Verfahren ein digitales Audiodaten-Signal (Ausgangssignal) mindestens eines Gesprächspartners empfangen, wobei das das digitale Audiodaten-Signal durch Komprimierung aus einem analogen Audiodaten-Signal des jeweiligen Gesprächspartners entstanden ist, wobei das digitale Audiodaten-Signal eine Vielzahl von aneinander gereihten digitalen Audiodatenpaketen mit einer vorgegebenen Länge L aufweist, wobei jedes Audiodatenpaket eine Sequenz aus einer Vielzahl von Bytes darstellt und jedem Byte eine Pegelhöhe zugeordnet ist. Anschließend wird das digitale Audiodaten-Signal mindestens eines Gesprächspartners verändert, wobei die nachfolgenden Schritte abschnittsweise für das gesamte digitale Audiodaten-Signal (d.h. über die gesamte Länge des digitalen Audiodaten-Signals), das N digitalen Audiodatenpaketen des jeweiligen Gesprächspartners pro Zeiteinheit aufweist, durchgeführt werden:
- automatisches Auswählen eines vorgegebenen Anteils der N digitalen Audiodatenpakete pro Zeiteinheit in dem jeweiligen Abschnitt,
- automatisches Ersetzen jedes der ausgewählten Audiodatenpakete mit jeweils einem Ersatz-Audiodatenpaket gleicher Länge L, wobei das Ersatz-Audiodatenpaket jeweils
   ▪ eine gegenüber der Sequenz des jeweils ausgewählten Audiodatenpakets geänderten Reihenfolge der Pegelhöhen oder
   ▪ die gleiche mittlere Pegelhöhe wie das jeweilige ausgewählte Audiodatenpaket besitzt,
   so dass ein informationsreduziertes Audiodaten-Signal entsteht.

Das so erhaltene jeweilige informationsreduzierte Audiodaten-Signal wird danach gespeichert. Hierbei wird das jeweilige ermittelte Ersatz-Audiodatenpaket an genau der Stelle des Audiodaten-Signals eingesetzt (ersetzt), an der sich das zugehörige ausgewählte Audiodatenpaket im Ausgangssignal befand. Dies bedeutet, dass sich, wenn der Anteil der N digitalen Audiodatenpakete pro Zeiteinheit, die ersetzt werden, kleiner als 100 % ist, das informationsreduzierte Audiodaten-Signal aus Audiodatenpaketen des Ausgangssignals und Ersatz-Audiodatenpaketen zusammensetzt. Die Reihenfolge der Audiodatenpakete bzw. der zugehörigen Ersatz-Audiodatenpakete im Signal ist unverändert bzw. entspricht der Reihenfolge der Audiodatenpakete im Ausgangssignal.

Im Rahmen der vorliegenden Erfindung wird davon ausgegangen, dass die Audiodatenpakete jeweils die gleiche zeitliche Länge L mit der gleichen Anzahl BL von Bytes (z.B. 160) aufweist. Die Erfindung ist jedoch für Audiodaten-Signale mit unterschiedlicher zeitlicher Länge und/oder unterschiedlicher Anzahl von Bytes analog anwendbar. Bei einem solchen Fall ist die Anzahl der Bytes des jeweiligen ausgewählten Audiodatenpakets zu beachten. Das Ersatz-Audiodatenpaket muss die gleiche Bytelänge, d.h. die gleiche Anzahl von Bytes, besitzen wie das zugehörige ausgewählte Audiodatenpaket.

Das erfindungsgemäße Verfahren ermöglicht die Verwendung von digitalisierten Audiodaten-Signalen für die Qualitätskontrolle der Arbeit der Agenten, da das gesprochene Wort / die gesprochene Information (sowie Musik oder sonstige Geräusche) aus den vor der Speicherung vorliegenden Signalen entfernt wird. Durch die Ersetzung der ausgewählten Audiodatenpakete mit Ersatz-Audiodatenpaketen, die jedoch die gleiche mittlere Pegelhöhe oder die gleiche Pegelhöhe an vertauschter Position im Audiodatenpaket besitzen, bleibt die Pegelhöhe oder mittlere Pegelhöhe des jeweiligen Audiodatenpakets als Eigenschaft des Audiodaten-Signals erhalten, die zur Analyse hinsichtlich der Qualität der Agententätigkeit herangezogen werden kann. Hierbei kann das jeweilige Ersatz-Audiodatenpaket aus dem ausgewählten Original-Audiodatenpaket nach einem vorgegebenen Algorithmus ermittelt (berechnet) werden oder nach einer vorgegebenen Vorschrift aus einer Vielzahl von vorgegebenen (z.B. vorberechneten), gespeicherten Ersatz-Audiodatenpaketen ausgewählt und übermittelt werden. Für eine Reduzierung der Information des jeweiligen Audiodatenpakets wird beispielsweise die Frequenzinformation verändert. Durch Veränderungen im Audiodaten-Signal, insbesondere die veränderte Frequenzinformation, wird die in dem Audiosignal enthaltene Sprach-, Musik- und/oder Geräusch-Audioinformation derart verändert, dass diese nicht mehr erkennbar oder nutzbar ist. Beispielsweise kann der Inhalt der in dem ursprünglichen analogen oder digitalen Audiodaten-Signal enthaltenen gesprochenen Sprache oder gespielten Musik nicht mehr erkannt werden. Das informationsreduzierte Audiodaten-Signal fällt daher nicht unter die Regelungen des Datenschutzes bzw. wird von den strafrechtlichen Regelungen nicht erfasst.

Hierbei erfolgt die Umwandlung des digitalen Audiodaten-Signals eines Gesprächspartners in das entsprechende informationsreduzierte Audiodaten-Signal erfindungsgemäß nach und nach (abschnittsweise), so dass es nicht erforderlich ist, große Teile oder das gesamte Ausgangssignal zu speichern. Beispielsweise kann das erfindungsgemäße Verfahren zuerst mit den ersten k Audiodatenpaketen (k ist eine ganze Zahl und größer als 1, z.B. 1<= k <= 50, wobei die Länge eines Audiodaten-Signals beispielsweise 20 ms beträgt), danach mit den zweiten k Audiodatenpaketen und anschließend mit den dritten k Audiodatenpaketen usw. durchgeführt werden, so dass nach und nach das gesamte digitale Audiodaten-Signal in das informationsreduzierte Audiodaten-Signal umgewandelt wird. Hierbei werden die einzelnen umgewandelten Abschnitte in der gleichen Reihenfolge, wie diese im Ausgangssignal vorliegen, zu dem informationsreduzierten Audiodaten-Signal zusammengesetzt. Für die Umwandlung wird der zu bearbeitende Abschnitt des digitalen Audiodaten-Ausgangssignals mit k Audiodatenpaketen in einem flüchtigen Speicher einer Speichereinheit für die Bearbeitung zwischengespeichert oder hierfür dupliziert und sofort nach der Ermittlung des jeweiligen Abschnitts des informationsreduzierten Audiodaten-Signals wieder gelöscht. Wenn nicht nur das Audiodaten-Signal des Agenten in das informationsreduzierte Audiodaten-Signal umgewandelt werden soll, sondern auch das Signal des mindestens einen weiteren Gesprächspartners (z.B. des mindestens einen Kunden), so erfolgt in einem Ausführungsbeispiel die Umwandlung des digitalen Audiodaten-Ausgangssignals aller Gesprächspartner parallel.

Das/die gespeicherte(n) informationsreduzierte(n) Audiodaten-Signal(e) eines oder mehrerer Gesprächspartner (z.B. Agent und Kunde) kann dann in der Datenverarbeitungseinrichtung der erfindungsgemäßen Vorrichtung und/oder an eine weitere Datenverarbeitungseinrichtung übermittelt und automatisch hinsichtlich Pegelhöhen, Pegelhöhenänderungen, Frequenzen und/oder Frequenzänderungen im Verlauf des informationsreduzierten Audiodaten-Signals bzw. deren jeweilige Abfolge und Dauer, auch im Vergleich mit dem jeweiligen informationsreduzierten Audiodaten-Signal des jeweiligen Gesprächspartners/der jeweiligen Gesprächspartner, d.h. hinsichtlich Agent und Kunde, analysiert werden, um die Qualität der Arbeit des Callcenter-Agenten bzw. des Callcenters zu bewerten. Hierfür werden unten einige Beispiele erläutert.

Nach der vorliegenden Erfindung wird die Informationsreduzierung im Signal größer, wenn der Anteil an den N digitalen Audiodatenpaketen pro Zeiteinheit, der ausgewählt und automatisch durch ein Ersatz-Audiodatenpaket ersetzt wird, erhöht wird. Hierbei ist beispielsweise ein Audiodatenpaket 20 ms lang, d.h. beispielsweise beträgt N = 50 in einer Zeiteinheit von einer Sekunde. Vorzugsweise ist der Anteil der ersetzten Audiodatenpakete größer oder gleich 80 % von N Audiodatenpaketen pro Zeiteinheit, besonders bevorzugt größer oder gleich 90 % von N Audiodatenpaketen pro Zeiteinheit und ganz besonders bevorzugt 100 % von N Audiodatenpaketen pro Zeiteinheit, d.h. die Ersetzung betrifft alle Audiodatenpakete des Audiodaten-Signals. Hierbei kann die Auswahl der digitalen Audiodatenpakete zur Ersetzung aus den N digitalen Audiodatenpaketen pro Zeiteinheit zufällig oder nach einer vorgegebenen Vorschrift erfolgen (z.B. jeweils die ersten 4 Audiodatenpakete von 5 aufeinander folgenden Audiodatenpaketen).

**In** einem Ausführungsbeispiel können zur Ermittlung des Ersatz-Audiodatenpakets, das ein ausgewähltes Audiodatenpaket mit der Bytelänge **BL** ersetzt, die folgenden Schritte ausgeführt werden:
- Auswahl einer vorgegebenen Anzahl der Byte-Positionen I (I₁, I₂, ... I_{PL}) aus der Sequenz des ausgewählten Audiodatenpakets der Bytelänge **BL,** wobei der Ort der ausgewählten Position(en) im Byte des jeweiligen Audiodatenpakets zufällig oder vorgegeben ist,
   wobei für jede ausgewählte Position I
   - eine Zufallszahl PZ (ganze Zahl) im Bereich 0 <= PZ < BL bestimmt wird und
   - die jeweils zugeordneten Pegelhöhen der Bytes an den Positionen I und I_{PZ} vertauscht werden.
Bei diesem Ausführungsbeispiel wird das zu dem jeweiligen ausgewählten Audiodatenpaket zugehörige Ersatz-Audiodatenpaket aus dem jeweiligen ausgewählten Audiodatenpaket ermittelt, wobei die Pegelhöhen an bestimmten, zufällig ausgewählten Byte-Positionen vertauscht werden. Hierdurch bleiben die Pegelhöhen an sich in dem Audiodatenpaket erhalten, da sie ja nur hinsichtlich ihrer Position im Audiodatenpaket vertauscht werden. Allerdings ändert sich hierdurch die in dem ausgewählten Audiodatenpaket enthaltene Frequenzinformation; die Frequenz wird sich in den meisten Fällen erhöhen. Dieses Ausführungsbeispiel der Ermittlung eines Ersatz-Audiodatenpakets ist besonders einfach zu erzeugen.

In Varianten des obigen Ausführungsbeispiels werden vorzugsweise mindestens 70 % der BL Byte in die Vertauschung der Pegelhöhen einbezogen, besonders bevorzugt mindestens 90 % der BL Byte, ganz besonders bevorzugt alle BL Byte.

Das obige Ausführungsbeispiel ergibt sich aus der aus empirischen Erhebungen durch die Erfinder gewonnene Erkenntnis, dass die Reduzierung der in einem Audiodaten-Signal enthaltene Audioinformation die nachfolgend aufgeführten Level aufweist, wobei sich die angegebene Prozentzahl auf den Anteil der vertauschten Byte der BL Byte bezieht (d.h. bei 100 % wurde die Pegelhöhe jedes Byte mindestens einmal mit der Pegelhöhe eines anderen Byte zufällig vertauscht):
< 10%: Der Sprecher ist für Mensch und Maschine hörbar und erkennbar (d.h. als eine bestimmte Person identifizierbar). Eine maschinelle Spracherkennung ist erfolgreich (z.B. mittels Sprachassistent Siri).
< 20%: Der Sprecher ist für Menschen hörbar und erkennbar. Eine maschinelle Spracherkennung (z.B. mittels Sprachassistent Siri) ist ungenau oder schlägt fehl.
< 40%: Ein Sprecher ist für geübte Menschen hörbar, aber der Sprecher nicht sicher erkennbar. Eine maschinelle Spracherkennung (z.B. mittels Sprachassistent Siri) schlägt fehl.
< 70%: Geringe Teile der Sprache können in Ausnahmefällen von Menschen gehört und verstanden werden.
>= 70% Eine Sprachinformation kann nicht mehr gehört oder erkannt werden (bezogen auf Mensch und Maschine).

**In** einem weiteren Ausführungsbeispiel werden zur Ermittlung des Ersatz-Audiodatenpakets, das ein ausgewähltes Audiodatenpaket mit der Bytelänge **BL** oder der Länge L ersetzt, die folgenden Schritte ausgeführt:
- Bereitstellen einer Matrix enthaltend Ersatz-Audiodatenpaketen mit der Bytelänge **BL** oder der Länge **L,** wobei jedes Ersatz-Audiodatenpaket aufweist
   - eine bestimmte Pegelhöhe aus einer vorgegebenen Anzahl von Pegelhöhen und
   - eine vorgegebene Frequenz oder ein vorgegebenes Frequenzspektrum,
- Bestimmung einer mittleren Pegelhöhe einer vorgegebenen Anzahl von Byte der BL Bytes des ausgewählten Audiodatenpakets oder des gesamten ausgewählten Audiodatenpakets der Länge L,
- Auswählen desjenigen Audiodatenpakets der Matrix, dessen Pegelhöhe den kleinsten Unterschied zu der mittleren Pegelhöhe des ausgewählten Audiodatenpakets aufweist, und
- Bereitstellen des ausgewählten Audiodatenpakets als Ersatz-Audiodatenpaket.

Jedes Ersatz-Audiodatenpaket der Matrix kann eine vorgegebene Frequenz oder ein vorgegebenes Frequenzspektrum, beispielsweise den Ton eines bestimmten Instruments (Klavierton, Celloton, Gitarrenton, Querflötenton oder Fagottton) oder weißes Rauschen, 1/f-Rauschen, 1/f²-Rauschen darstellen, wobei jedes Ersatz-Audiodatenpaket durch eine bestimmte, vorgegebene Frequenz und eine bestimmte, mittlere Pegelhöhe gekennzeichnet ist. Hierbei können die Pegelhöhen beispielsweise in Abständen von 5 % der maximalen Pegelhöhe zwischen 0 und 100 % der maximalen Pegelhöhe variieren.

Der Vorteil dieses Ausführungsbeispiels besteht darin, dass eine Information zur mittleren Pegelhöhe des jeweiligen ausgewählten Audiodatenpakets erhalten bleibt, die zur Auswertung des Audiodaten-Signals herangezogen werden können. Da die Ersatz-Audiodatenpakete des informationsreduzierten Audiodaten-Signals jeweils lediglich die mittlere Pegelhöhe des jeweiligen ursprünglichen Audiodatenpakets und eine vorgegebene Frequenz oder Frequenzspektrum verkörpert, ist, verglichen mit dem oben beschriebenen Verfahren mit vertauschten Pegelhöhen, noch nicht einmal eine hypothetische teilweise Rückführung des informationsreduzierten Audiodaten-Signals auf das ursprüngliche Audiodaten-Signal möglich. Dies ist in Bezug auf die Datensicherheit bzw. die strafrechtliche Relevanz der Datenspeicherung von Vorteil.

In einem weiteren Ausführungsbeispiel werden alternativ die folgenden Schritte zur Ermittlung des Ersatz-Audiodatenpakets, das ein ausgewähltes Audiodatenpaket mit der Bytelänge BL oder der Länge L ersetzt, ausgeführt:
- Bereitstellen einer Matrix enthaltend Ersatz-Audiodatenpakete mit der Bytelänge BL oder der Länge L, wobei jedes Ersatz-Audiodatenpaket aufweist
   - eine bestimmte Pegelhöhe aus einer vorgegebenen Anzahl von Pegelhöhen und
   - eine vorgegebene Frequenz oder ein vorgegebenes Frequenzspektrum aus einer vorgegebenen Anzahl von Frequenzen oder Frequenzspektren,
- Bestimmung der mittleren Pegelhöhe einer vorgegebenen Anzahl von Byte der BL Bytes des ausgewählten Audiodatenpakets oder des gesamten ausgewählten Audiodatenpakets der Länge L,
- Bestimmung der dominantesten Frequenz des ausgewählten Audiodatenpakets,
- Auswählen desjenigen Audiodatenpakets aus der Matrix als Ersatz-Audiodatenpaket, dessen Frequenz oder dessen dominanteste oder mittlere Frequenz des Frequenzspektrums und dessen Pegelhöhe den kleinsten Unterschied zu der dominantesten Frequenz und der mittleren Pegelhöhe des ausgewählten Audiodatenpakets aufweist, und
- Bereitstellen des ausgewählten Audiodatenpakets als Ersatz-Audiodatenpaket.

Der Vorteil dieses Ausführungsbeispiels besteht darin, dass neben der Information zur mittleren Pegelhöhe des jeweiligen ausgewählten Audiodatenpakets auch eine Frequenzinformation des ursprünglichen Audiodatenpakets (die dominanteste Frequenz) und somit des gesamten Audiodaten-Signals erhalten bleibt, die zusätzlich zur Auswertung des Audiodaten-Signals herangezogen werden kann. Hierbei ist die dominanteste Frequenz die stärkste Frequenz des jeweiligen ausgewählten Audiodatenpakets, d.h. die Frequenz mit der höchsten Amplitude. Sie kann beispielsweise über eine schnelle Fouriertransformation (FFT) oder über eine diskrete Fouriertransformation (DFT), beispielsweise einen Goertzel-Algorithmus berechnet werden.

Bei den obigen Verfahren beträgt die Anzahl der Byte, die aus den **PL** Byte zur Bestimmung der mittleren Pegelhöhe ausgewählt wird, mindestens 25 % von **PL,** vorzugsweise mindestens 50 % von **PL,** besonders bevorzugt mindestens 75 % von PL.

Weiter wird bei diesem Ausführungsbeispiel bevorzugt die mittlere Pegelhöhe aus dem Betrag der jeweiligen Pegelhöhen bestimmt. Beispielsweise wird die mittlere Pegelhöhe als arithmetisches Mittel des Betrags der jeweiligen Pegelhöhen bestimmt.

Zur Bestimmung des Unterschieds in Frequenz und Pegelhöhe kann beispielsweise
- der Betrag der Differenz der Frequenz oder der mittleren oder dominantesten Frequenz des Audiodatenpakets der Matrix und der dominantesten Frequenz des Audiodatenpakets des Ausgangssignals und
- der Betrag der Differenz der Pegelhöhe des Audiodatenpakets der Matrix und der mittleren Pegelhöhe des Audiodatenpakets des Ausgangssignals gebildet werden.

Das Audiodatenpaket der Matrix, dessen Beträge der obigen Differenzen am kleinsten sind, wird als zugehöriges Ersatz-Audiodatenpaket ausgewählt.

Die erfindungsgemäßen Verfahren stellt ein Verfahren dar, mit dem ein informationsreduziertes Audiodaten-Signal erzeugt und abgespeichert wird, so dass mithilfe der informationsreduzierten Audiodaten-Signale der Gesprächspartner (d.h. Agent und Kunde) die Qualität der Arbeit der Agenten eines Callcenters einfach und kostengünstig überwacht werden kann. Hieraus kann auch der notwendige Trainings- und Schulungsaufwand für die Agenten des Callcenters abgeleitet werden.

Wie oben bereits erwähnt wurde, wird die obige Aufgabenstellung außerdem durch die Vorrichtung mit den Merkmalen des Anspruchs 9 gelöst.

Die erfindungsgemäße Vorrichtung weist insbesondere auf:
- einen Dateneingang der dazu eingerichtet ist, ein digitales Audiodaten-Signal (Ausgangssignal) mindestens eines Gesprächspartners zu empfangen, wobei das digitale Audiodaten-Signal durch Komprimierung aus einem analogen Audiodaten-Signal des jeweiligen Gesprächspartners entstanden ist, wobei das digitale Audiodaten-Signal eine Vielzahl von aneinander gereihten digitalen Audiodatenpaketen mit einer vorgegebenen Länge L aufweist, wobei jedes Audiodatenpaket eine Sequenz aus einer Vielzahl von Bytes darstellt und jedem Byte eine Pegelhöhe zugeordnet ist,
- eine Datenverarbeitungseinrichtung, welche dazu eingerichtet ist, das digitale Audiodaten-Signal mindestens eines Gesprächspartners zu verändern, wobei die Datenverarbeitungseinrichtung dazu eingerichtet ist, die nachfolgenden Schritte abschnittsweise für das gesamte digitale Audiodaten-Signal, das N digitale Audiodatenpakete des jeweiligen Gesprächspartners pro Zeiteinheit aufweist, durchzuführen:
   - automatisches Auswählen eines vorgegebenen Anteils der N digitalen Audiodatenpakete pro Zeiteinheit in dem jeweiligen Abschnitt,
   - automatisches Ersetzen jedes der ausgewählten Audiodatenpakete mit jeweils einem Ersatz-Audiodatenpaket gleicher Länge L, wobei das Ersatz-Audiodatenpaket jeweils
      ▪ eine gegenüber der Sequenz des jeweils ausgewählten Audiodatenpakets geänderte Reihenfolge der Pegelhöhen oder
      ▪ die gleiche mittlere Pegelhöhe wie das jeweilige ausgewählte Audiodatenpaket besitzt,
      so dass ein informationsreduziertes Audiodaten-Signal entsteht, und
- eine Datenspeichereinrichtung, die dazu eingerichtet ist, das jeweilige informationsreduzierte Audiodaten-Signal zu speichern.

Wie oben bereits hinsichtlich des Verfahrens erläutert wurde, beinhaltet die erfindungsgemäße Vorrichtung eine einfache und kostengünstige Möglichkeit, bei einem Telefonat zwischen einem Callcenter-Agenten und dessen Gesprächspartner aufgezeichnete Audiodaten für eine automatische Analyse von Pegelhöhen und/oder Frequenzen bzw. deren Veränderungen im Verlauf des Signals bereitzustellen und zu speichern, ohne dass dies in Bezug auf das Strafrecht oder den Datenschutz problematisch wäre.

In einer Ausführungsform ist die Datenverarbeitungseinrichtung weiter dazu eingerichtet, zur Ermittlung des Ersatz-Audiodatenpakets, das ein ausgewähltes Audiodatenpaket mit der Länge L und einer Bytelänge BL ersetzt, die folgenden Schritte auszuführen:
- Auswahl einer vorgegebenen Anzahl der Byte-Positionen I (I₁, I₂, ... I_{PL}) aus der Sequenz des ausgewählten Audiodatenpakets der Bytelänge BL, wobei der Ort der ausgewählten Position(en) im Byte des jeweiligen Audiodatenpakets zufällig oder vorgegeben ist,
wobei für jede ausgewählte Position I
- eine Zufallszahl PZ im Bereich 0 <= PZ < BL bestimmt wird und
- die jeweils zugeordneten Pegelhöhen der Bytes an den Positionen I und I_{PZ} vertauscht werden.

Wie oben erläutert wurde, ist es vorteilhaft, wenn mindestens 70 % der BL Byte des jeweiligen ausgewählten Audiodatenpakets in die Vertauschung der Pegelhöhen einbezogen wird.

In einem Ausführungsbeispiel ist die Datenverarbeitungseinrichtung weiter dazu eingerichtet, zur Ermittlung des Ersatz-Audiodatenpakets, das ein ausgewähltes Audiodatenpaket mit der Bytelänge BL oder der Länge L ersetzt, die folgenden Schritte auszuführen:
- Bereitstellen einer Matrix enthaltend Ersatz-Audiodatenpakete mit der Bytelänge BL oder der Länge L, wobei jedes Ersatz-Audiodatenpaket aufweist
   - eine bestimmte Pegelhöhe aus einer vorgegebenen Anzahl Pegelhöhen und
   - eine vorgegebene Frequenz oder ein vorgegebenes Frequenzspektrum,
- Bestimmung der mittleren Pegelhöhe einer vorgegebenen Anzahl von Bytes der BL Bytes des ausgewählten Audiodatenpakets oder des gesamten ausgewählten Audiodatenpakets der Länge L,
- Auswählen desjenigen Audiodatenpakets der Matrix, dessen Pegelhöhe den kleinsten Unterschied zu der mittleren Pegelhöhe des ausgewählten Audiodatenpakets aufweist, und
- Bereitstellen des ausgewählten Audiodatenpakets als Ersatz-Audiodatenpaket.

In einem alternativen Ausführungsbeispiel ist die Datenverarbeitungseinrichtung dazu eingerichtet, zur Ermittlung des Ersatz-Audiodatenpakets, das ein ausgewähltes Audiodatenpaket mit der Bytelänge BL oder der Länge L ersetzt, die folgenden Schritte auszuführen:
- Bereitstellen einer Matrix enthaltend Ersatz-Audiodatenpakete mit der Bytelänge BL oder der Länge L, wobei jedes Ersatz-Audiodatenpaket aufweist
   - eine bestimmte Pegelhöhe aus einer vorgegebenen Anzahl von Pegelhöhen und
   - eine vorgegebene Frequenz oder ein vorgegebenes Frequenzspektrum aus einer vorgegebenen Anzahl von Frequenzen oder Frequenzspektren,
- Bestimmung der mittleren Pegelhöhe einer vorgegebenen Anzahl von Byte der **BL** Bytes des ausgewählten Audiodatenpakets oder des gesamten ausgewählten Audiodatenpakets der Länge **L,**
- Bestimmung der dominantesten Frequenz des ausgewählten Audiodatenpakets,
- Auswählen desjenigen Audiodatenpakets aus der Matrix als Ersatz-Audiodatenpaket, dessen Frequenz oder dessen dominanteste oder mittlere Frequenz des Frequenzspektrums und dessen Pegelhöhe den kleinsten Unterschied zu der dominantesten Frequenz und der mittleren Pegelhöhe des ausgewählten Audiodatenpakets aufweist, und
- Bereitstellen des ausgewählten Audiodatenpakets als Ersatz-Audiodatenpaket.

Bei den obigen Vorrichtungen ist es von Vorteil, wenn die Anzahl der Bytes, die aus den BL Byte zur Bestimmung der mittleren Pegelhöhe ausgewählt wird, mindestens 25 % von BL beträgt.

Zudem ist es, wie oben erläutert wurde, vorteilhaft, wenn die mittlere Pegelhöhe aus dem Betrag der jeweiligen Pegelhöhen bestimmt wird.

Das mittels des erfindungsgemäßen Verfahrens und mittels der erfindungsgemäßen Vorrichtung erzeugte informationsreduzierte Audiodaten-Signal wird anschließend an ein internes oder externes Analyseverfahren bzw. Analysevorrichtung zur automatischen Qualitätsüberwachung übergeben. Hierbei werden verschiedene Eigenschaften des informationsreduzierten Signals eines Gesprächspartners oder der mindestens zwei Gesprächspartner (Agent und mindestens ein Kunde) hinsichtlich Pegelhöhe und Frequenz analysiert. Nachfolgend werden einige Beispiele hierfür erläutert.
- Durch eine Analyse dahingehend, wann ein minimaler Pegelhöhen-Grenzwert im Signal des Agenten und seines Gesprächspartners überschritten wird, kann beispielsweise ermittelt werden, wann beiden Parteien tatsächlich gesprochen haben. Hierdurch kann z.B. herausgefunden werden, ob der Agent nur vorgegeben hat, ein Gespräch zu führen, obwohl er auf der anderen Seite keinen Gesprächspartner hatte.
- Weiter kann durch Prüfung, ob die Pegelhöhen auf beiden Seiten abwechseln, festgestellt werden, wie lange der Agent und sein Gesprächspartner gesprochen haben. Hierdurch kann ermittelt werden, ob die Länge der technischen Verbindung von der Länge des eigentlichen Gespräches abweicht.
- Wird der zeitliche Anteil von Pegelhöhen, die einen minimalen Pegelhöhen-Grenzwert überschreiten, des Agenten und seines Gesprächspartners analysiert, können die Gesprächsanteile der beiden Sprecher ermittelt werden. Hierdurch wird sichtbar, ob nur der Agent geredet hat, obwohl eigentlich ein sich abwechselndes Gespräch mit dem Kunden erwartet worden wäre.
- Bei einer Analyse von Zeitpunkten, an denen eine große Pegelhöhe aufseiten beider Gesprächspartner (Agent und Kunde) vorhanden war, kann festgestellt werden, ob einer der Gesprächspartner den anderen unterbrochen hat und ob der Agent dem Kunden "ins Wort gefallen" ist.
- Ob der Agent zu schnell redet (d.h. eine hohe Sprechgeschwindigkeit vorliegt) und damit möglicherweise den Kunden überfordert, kann festgestellt werden, wenn die Anzahl der Pausen (d.h. Pegelhöhe unterhalb des minimalen Pegelhöhen-Grenzwerts) pro Zeiteinheit ausgewertet wird. Hierbei wird davon ausgegangen, dass in dem informationsreduzierten Audiodaten-Signal ein Wort von dem nächsten durch eine Pause getrennt ist.
- Problematische Gesprächsverläufe können beispielsweise dadurch erkannt werden, dass sich die Pegelhöhe beider oder eines Gesprächspartners und/oder die Sprechgeschwindigkeit und/oder die Anzahl der Gesprächswechsel im Laufe des Telefonats erhöht.
- In einem weiteren Beispiel können die Gesprächspausen aufseiten des Agenten oder des Kunden (d.h. Messung der Zeit, in der die Pegelhöhen unterhalb des minimalen Pegelhöhen-Grenzwerts liegt) analysiert werden. Hierdurch kann festgestellt werden, ob der Agent den Kunden warten lässt und ob er nur schweigt, obwohl er eigentlich das Gespräch führen sollte.

Das erfindungsgemäße Verfahren und die erfindungsgemäße Vorrichtung werden nachfolgend unter Bezugnahme auf Zeichnungen näher erläutert. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbezügen.

Es zeigt schematisch:

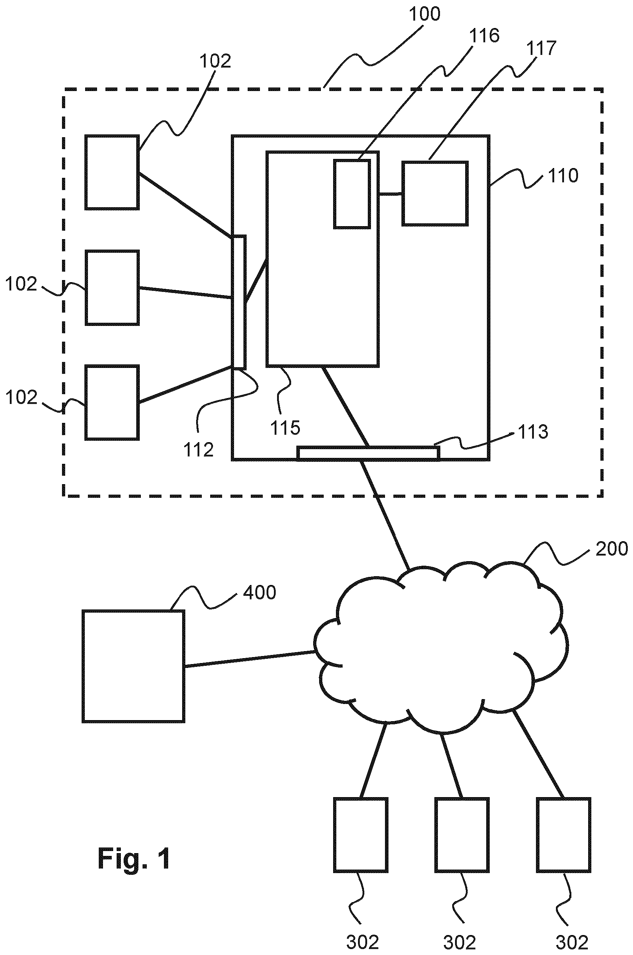

- Fig. 1: ein Kommunikationssystem mit einem Callcenter, das eine erfindungsgemäßen Vorrichtung aufweist.

Das in Fig. 1 dargestellte Kommunikationssystem weist ein Callcenter 100, ein Kommunikationsnetzwerk 200 und eine Vielzahl von Kommunikationsendgeräten (z.B. Mobiltelefone, VoIP-Telefone, ISDN-Telefone) 302 von Kunden auf. Ferner ist eine externe Auswerteeinrichtung 400 vorgesehen, mit denen von dem Callcenter zur Verfügung gestellte informationsreduzierte Audiodaten-Signale aus der Kommunikation der Callcenter-Agenten mit Kunden über das Kommunikationssystem automatisch hinsichtlich der Qualität überwacht werden können. Die Auswerteeinrichtung 400 kann auch in das Callcenter 100 integriert sein.

Zu dem Callcenter 100 gehört eine Vielzahl von Kommunikationsendgeräten 102 der Agenten, die jeweils mit einer Datenverarbeitungseinrichtung 110 verbunden sind. Die Datenverarbeitungseinrichtung 110 kann eine Telefonanlage beinhalten. Die Datenverarbeitungseinrichtung 110 weist Ein- und Ausgänge 112, 113 (z.B. Prosody X Telefoniekarte der Firma Aculab) auf, die mit einem Prozessor 115 verbunden sind. Der Prozessor 115 enthält eine Einrichtung 116 zur Erzeugung des informationsreduzierten Audiodatensignals und ist mit einer Speichereinrichtung 117 (z.B. geshartes Verzeichnis, Festplattenspeicher) verbunden. Die Einrichtung zur Erzeugung des informationsreduzierten Audiodatensignals kann auch in einem separaten Prozessor untergebracht sein, der mit dem Prozessor 115 verbunden ist. Wenn die Auswerteeinrichtung 400 in das Callcenter 100 integriert ist, ist diese mit der Datenverarbeitungseinrichtung 110 verbunden oder Bestandteil dieser. Der Prozessor 115 kann beispielsweise einen Dialer enthalten oder einen Dialer (z.B. ttPhoenix-predictive-Dialer) oder eine FritzBox darstellen.

Die in Fig. 1 gezeigten Verbindungen zwischen den Elementen des Kommunikationssystems (fette Linien) können drahtgebunden oder drahtlos realisiert sein.

Nach dem Aufbau einer Kommunikationsverbindung zwischen dem Kommunikationsendgerät 102 des Agenten und dem Kommunikationsendgerät 302 des Kunden werden durch das Gespräch, das der Agent mit dem Kunden führt, sowohl vom Kunden als auch vom Agenten Audiodaten erzeugt. Diese, zunächst analogen, Audiodaten des Agenten und des Kunden werden von dem jeweiligen Kommunikationsendgerät 102, 302 empfangen und in dem jeweiligen Kommunikationsendgerät 102, 302 beispielsweise mittels eines eingebauten Codec in digitale Audiodaten-Signale umgewandelt. Diese digitalen Audiodaten-Signale werden dann, ggf. über das Kommunikationsnetzwerk 200, an die Datenverarbeitungseinrichtung 110 des Callcenters 100 übermittelt. Hierbei erfolgt die Umwandlung in digitale Audiodaten-Signale, welche Sampling und Digitalisierung des analogen Audiodatensignals jedes Gesprächspartners beinhaltet, derart, dass für jeden Gesprächspartner ein digitales Audiodaten-Signal mit aneinander gereihten digitalen Audiodatenpaketen mit einer vorgegebenen Bytelänge **BL** (BL ist beispielsweise 160) oder Länge L (z.B. 20 ms) entsteht, wobei jedem Byte des digitalen Audiodatenpakets eine Pegelhöhe zugeordnet ist. Jedes Audiodatenpaket besitzt eine vorgegebene Laufzeit, die vorzugsweise kleiner als 100 ms ist und beispielsweise (bei VoIP) 20 ms beträgt.

Das digitale Audiodaten-Signal jedes Gesprächspartners gelangt über den jeweiligen Eingang 112, 113 der Datenverarbeitungseinrichtung 110 zu dem zentralen Prozessor 115. Dort wird das digitale Audiodaten-Signal des Agenten und des Kunden an die Einrichtung 116 zur Erzeugung des informationsreduzierten Audiodaten-Signals weitergeleitet und hier abschnittsweise verändert, so dass das informationsreduzierte Audiodaten-Signal entsteht. Das erzeugte informationsreduzierte Audiodaten-Signal jedes Gesprächspartners wird anschließend in der Speichereinrichtung 117 gespeichert. Das gespeicherte informationsreduzierte Audiodaten-Signal kann dann in der Auswerteeinrichtung 400 zur automatischen Qualitätsüberwachung wie oben beschrieben weiterverarbeitet werden.

Das informationsreduzierte Audiodaten-Signal eines Gesprächspartners wird in der Einrichtung 116 zur Erzeugung eines informationsreduzierten Audiodaten-Signals abschnittsweise wie folgt aus dem originalen digitalen Audiodatensignal (Ausgangssignal) des jeweiligen Gesprächspartners erzeugt. Aus den in einem Abschnitt (z.B. in Abschnitten von 1 s oder 5 s) des digitalen Audiodaten-Signals enthaltenen originalen digitalen Audiodatenpaketen wird ein vorgegebener Anteil der N Audiodatenpakete pro Zeiteinheit (z.B. pro Sekunde) ausgewählt, beispielsweise jedes zweite Audiodatenpaket (50 % von N) oder jedes Audiodatenpaket (100 % von N). Jedes ausgewählte Audiodatenpaket wird durch ein zugehöriges Ersatz-Audiodatenpaket ersetzt, und zwar an genau der Stelle (Position) des Ausgangssignals, an der sich das jeweilige zugehörige ausgewählte Audiodatenpaket befand. Anschließend wird der nächste Abschnitt des digitalen Audiodaten-Signals bearbeitet. Nach Abarbeitung und Ersetzung aller Abschnitte des digitalen Audiodaten-Signals und Zusammensetzung der Abschnitte ergibt sich das informationsreduzierte Audiodaten-Signal des jeweiligen Gesprächspartners. Das informationsreduzierte Audiodaten-Signal kann für mindestens zwei Gesprächspartner (z.B. Agent und Kunde) parallel erzeugt werden. Erst nach vollständiger Erzeugung des jeweiligen informationsreduzierten Audiodaten-Signals des jeweiligen Gesprächspartners wird dieses in der Speichereinrichtung 117 gespeichert.

In einem ersten Ausführungsbeispiel erfolgt die Ermittlung eines zugehörigen Ersatz-Audiodatenpakets aus dem ausgewählten Audiodatenpaket nach dem folgenden Verfahren:
- Es wird eine vorgegebene Anzahl der Byte-Positionen I (I₁, I₂, ... I_{PL}) des ausgewählten Audiodatenpakets ausgewählt, wobei der Ort der ausgewählten Position(en) im Byte des jeweiligen Audiodatenpakets zufällig oder vorgegeben ist. Beispielsweise wird jede zweite Byte-Position, d.h. I₂, I₄, I₆, ... I₁₆₀ oder mindestens 70% aller Byte-Positionen ausgewählt.
- Für jede ausgewählte Position I (z.B. I₂) wird
   - eine ganze Zufallszahl PZ im Bereich 0 <= PZ < BL bestimmt (z.B. PZ = 7) und
   - die jeweils zugeordnete Pegelhöhe der Bytes an den Positionen I und I_{PZ} (d.h. beispielsweise die zugeordneten Pegelhöhen an den Positionen 2 und 7 des Byte) werden vertauscht.

Wenn alle derartigen Vertauschungen für alle ausgewählten Positionen abgeschlossen sind, ist das Ersatz-Audiodatenpaket entstanden, wobei in einem Ausführungsbeispiel das Audiodatenpaket von Beginn des Audiodatenpakets bis zum Ende des Audiodatenpakets Byte für Byte durchgegangen wird und entweder das Byte nicht ausgewählt wird oder, bei einem ausgewählten Byte die Zufallszahl PZ erzeugt und die Pegelhöhe mit dem jeweiligen Byte vertauscht wird. Mehrfache Vertauschung kann dabei vorkommen. Hierdurch bleiben, bezogen auf das gesamte ausgewählte Audiodatenpaket, die Pegelhöhen erhalten, wobei die Positionen der Pegelhöhen gegenüber dem ausgewählten Audiodatenpaket vertauscht sind. Hierdurch wird die Frequenz des Audiodatenpakets verändert.

Das informationsreduzierte Audiodaten-Signal ist für dieses Ausführungsbeispiel folglich ein verrauschtes Signal, dessen enthaltene Audioinformation nicht mehr erkennbar ist.

In einem zweiten, zum ersten Ausführungsbeispiel alternativen Verfahren erfolgt die Ermittlung eines zugehörigen Ersatz-Audiodatenpakets aus dem ausgewählten Audiodatenpaket folgendermaßen:
- Es wird durch die Speichereinrichtung 117 eine Matrix mit Ersatz-Audiodatenpaketen mit der Bytelänge BL = 160 bereitgestellt. Hierbei weist jedes Ersatz-Audiodatenpaket
   - eine bestimmte Pegelhöhe aus einer vorgegebenen Anzahl Pegelhöhen (zwischen einer Pegelhöhe von 0 und einer maximalen Pegelhöhe in Schritten von 5 % der maximalen Pegelhöhe und
   - eine bestimmte, vorgegebene Frequenz oder ein bestimmtes, vorgegebenes Frequenzspektrum auf.
   Beispielsweise kann jedes Ersatz-Audiodatenpaket den Kammerton a¹ (440 Hz) mit der bestimmten Pegelhöhe beinhalten.
- Anschließend wird die mittleren Pegelhöhe der zugeordneten Pegelhöhen einer vorgegebenen Anzahl von Byte (z.B. 50 % der Byte, d.h. von 80 Byte) der BL = 160 Bytes des ausgewählten Audiodatenpakets bestimmt. Hierbei wird die mittlere Pegelhöhe als das arithmetische Mittel der Beträge der jeweiligen Pegelhöhen berechnet.
- Nun wird dasjenige Audiodatenpaket der Matrix ausgewählt, dessen Pegelhöhe den kleinsten Unterschied zu der berechneten mittleren Pegelhöhe des ausgewählten Audiodatenpakets aufweist. Der Unterschied kann durch Berechnung des Betrags der Differenz von Pegelhöhe des jeweiligen Matrix-Audiodatenpakets und der ermittelten mittleren Pegelhöhe des ausgewählten Audiodatenpakets bestimmt werden.
- Das aus der Matrix ausgewählte Ersatz-Audiodatenpaket wird dann als zu dem ausgewählten Audiodatenpaket des Ausgangssignals zugehöriges Ersatz-Audiodatenpaket zur Erzeugung des informationsreduzierten Audiodaten-Signals bereitgestellt.

In einer Weiterbildung des zweiten Ausführungsbeispiels enthält die Matrix von Ersatz-Audiodatenpaketen mit der Bytelänge BL = 160 die verschiedenen Pegelhöhen nicht nur für eine Frequenz sondern jeweils für eine Vielzahl von vorgegebenen Frequenzen oder sich um die vorgegebene Frequenz erstreckendes Frequenzspektrum, beispielsweise im Bereich 200 Hz bis 3 kHz in Schritten von 100 Hz, d.h. 100 Hz, 200 Hz, 300 Hz usw..

Um das für das ausgewählte Audiodatenpaket passende Ersatz-Audiodatenpaket zu finden, wird dann nicht nur, wie oben dargestellt, die mittlere Pegelhöhe bestimmt, sondern zusätzlich die für das jeweilige originale Audiodatenpaket dominanteste Frequenz ermittelt. Die dominanteste Frequenz kann beispielsweise mittels Fast-Fouriertransformation (FFT) aus dem jeweiligen ausgewählten Audiodatenpaket bestimmt werden. Es wird dann das Ersatz-Audiodatenpaket aus der Matrix ausgewählt, das hinsichtlich der Pegelhöhe und hinsichtlich der Frequenz der bestimmten mittleren Pegelhöhe und der ermittelten dominantesten Frequenz dem originalen Audiodatenpaket am nächsten kommt, d.h. das Ersatz-Audiodatenpaket, bei dem
- der Betrag der Differenz von Frequenz oder mittlerer oder dominantester Frequenz des Ersatz-Audiodatenpakets und dominantester Frequenz des Audiodatenpakets des Ausgangssignals am kleinsten ist und
- der Betrag der Differenz von Pegelhöhe des Ersatz-Audiodatenpakets und mittlerer Pegelhöhe des originalen Audiodatenpakets am kleinsten ist.

Das so aus der Matrix ausgewählte zugehörige Ersatz-Audiodatenpaket wird als Ersatz für das originale Audiodatenpaket bereitgestellt und anstelle des originalen Audiodatenpakets in das digitale Audiodaten-Signal des jeweiligen Gesprächspartners eingefügt, so dass das informationsreduzierte Audiodaten-Signal entsteht.

Die beiden zuletzt vorgestellten Möglichkeiten für die Ermittlung eines informationsreduzierten Datensignals bewirken eine zuverlässigere Beseitigung der in dem jeweiligen Signal enthaltenen Audioinformationen.

### Bezugszeichenliste

- 100: Callcenter
- 102: Kommunikationsendgerät eines Agenten
- 110: Datenverarbeitungseinrichtung
- 112: Ein- und Ausgang der Datenverarbeitungseinrichtung 110
- 113: Ein- und Ausgang der Datenverarbeitungseinrichtung 110
- 115: Prozessor
- 116: Einrichtung zur Erzeugung des informationsreduzierten Audiodaten-Signals
- 117: Speichereinrichtung zur Speicherung des informationsreduzierten Audiodaten-Signals
- 200: Kommunikationsnetzwerk
- 302: Kommunikationsendgerät eines Kunden
- 400: Auswerteeinrichtung

## Patentansprüche

1. Verfahren zur automatischen Überwachung von Telefonaten mit mindestens zwei Gesprächspartnern mit den folgenden Schritten:
- Empfangen eines digitalen Audiodaten-Signals mindestens eines Gesprächspartners, wobei das digitale Audiodaten-Signal durch Komprimierung aus einem analogen Audiodaten-Signal des jeweiligen Gesprächspartners entstanden ist, wobei das digitale Audiodaten-Signal eine Vielzahl von aneinander gereihten digitalen Audiodatenpaketen mit einer vorgegebenen Länge L aufweist, wobei jedes Audiodatenpaket eine Sequenz aus einer Vielzahl von Bytes darstellt und jedem Byte eine Pegelhöhe zugeordnet ist,
- Verändern des digitalen Audiodaten-Signals mindestens eines Gesprächspartners, wobei die nachfolgenden Schritte abschnittsweise für das gesamte digitale Audiodaten-Signal, das N digitale Audiodatenpaketen des jeweiligen Gesprächspartners pro Zeiteinheit aufweist, durchgeführt werden:
- automatisches Auswählen eines vorgegebenen Anteils der N digitalen Audiodatenpakete pro Zeiteinheit in dem jeweiligen Abschnitt,
- automatisches Ersetzen jedes der ausgewählten Audiodatenpakete mit jeweils einem Ersatz-Audiodatenpaket gleicher Länge L, wobei das Ersatz-Audiodatenpaket jeweils
▪ eine gegenüber der Sequenz des jeweils ausgewählten Audiodatenpakets geänderte Reihenfolge der Pegelhöhen oder
▪ die gleiche mittlere Pegelhöhe wie das jeweilige ausgewählte Audiodatenpaket besitzt,
so dass ein informationsreduziertes Audiodaten-Signal entsteht, und
- Speichern des jeweiligen informationsreduzierten Audiodaten-Signals.

2. Verfahren nach Anspruch 1, **dadurch gekennzeichnet, dass** der vorgegebene Anteil der digitalen Audiodatenpakete, der ausgewählt wird, 100 % von N ist.

3. Verfahren nach einem der vorhergehenden Ansprüche, **dadurch gekennzeichnet, dass** zur Ermittlung des Ersatz-Audiodatenpakets, das ein ausgewähltes Audiodatenpaket mit der Länge L und einer Bytelänge BL ersetzt, die folgenden Schritte ausgeführt werden:
- Auswahl einer vorgegebenen Anzahl der Byte-Positionen I (I₁, I₂, ... I_{PL}) aus der Sequenz des ausgewählten Audiodatenpakets der Bytelänge BL, wobei der Ort der ausgewählten Position(en) im Byte des jeweiligen Audiodatenpakets zufällig oder vorgegeben ist,
wobei für jede ausgewählte Position I
- eine Zufallszahl PZ im Bereich 0 <= PZ < BL bestimmt wird und
- die jeweils zugeordneten Pegelhöhen der Bytes an den Positionen I und I_{PZ} vertauscht werden.

4. Verfahren nach Anspruch 3, **dadurch gekennzeichnet, dass** mindestens 70 % der BL Byte des jeweiligen ausgewählten Audiodatenpakets in die Vertauschung der Pegelhöhen einbezogen werden.

5. Verfahren nach einem der Ansprüche 1 und 2, **dadurch gekennzeichnet, dass** zur Ermittlung des Ersatz-Audiodatenpakets, das ein ausgewähltes Audiodatenpaket mit der Bytelänge BL oder der Länge L ersetzt, die folgenden Schritte ausgeführt werden:
- Bereitstellen einer Matrix enthaltend Ersatz-Audiodatenpakete mit der Bytelänge BL oder der Länge L, wobei jedes Ersatz-Audiodatenpaket aufweist
• eine bestimmte Pegelhöhe aus einer vorgegebenen Anzahl Pegelhöhen und
• eine vorgegebene Frequenz oder ein vorgegebenes Frequenzspektrum,
- Bestimmung der mittleren Pegelhöhe einer vorgegebenen Anzahl von Byte der BL Bytes des ausgewählten Audiodatenpakets oder des gesamten ausgewählten Audiodatenpakets der Länge L,
- Auswählen desjenigen Audiodatenpakets der Matrix, dessen Pegelhöhe den kleinsten Unterschied zu der mittleren Pegelhöhe des ausgewählten Audiodatenpakets aufweist, und
- Bereitstellen des ausgewählten Audiodatenpakets als Ersatz-Audiodatenpaket.

6. Verfahren nach einem der Ansprüche 1 und 2, **dadurch gekennzeichnet, dass** zur Ermittlung des Ersatz-Audiodatenpakets, das ein ausgewähltes Audiodatenpaket mit der Bytelänge BL oder der Länge L ersetzt, die folgenden Schritte ausgeführt werden:
- Bereitstellen einer Matrix enthaltend Ersatz-Audiodatenpakete mit der Bytelänge BL oder der Länge L, wobei jedes Ersatz-Audiodatenpaket aufweist
• eine bestimmte Pegelhöhe aus einer vorgegebenen Anzahl von Pegelhöhen und
• eine vorgegebene Frequenz oder ein vorgegebenes Frequenzspektrum aus einer vorgegebenen Anzahl von Frequenzen oder Frequenzspektren,
- Bestimmung der mittleren Pegelhöhe einer vorgegebenen Anzahl von Byte der BL Bytes des ausgewählten Audiodatenpakets oder des gesamten ausgewählten Audiodatenpakets der Länge L,
- Bestimmung der dominantesten Frequenz des ausgewählten Audiodatenpakets,
- Auswählen desjenigen Audiodatenpakets aus der Matrix als Ersatz-Audiodatenpaket, dessen Frequenz oder dessen dominanteste oder mittlere Frequenz des Frequenzspektrums und dessen Pegelhöhe den kleinsten Unterschied zu der dominantesten Frequenz und der mittleren Pegelhöhe des ausgewählten Audiodatenpakets aufweist, und
- Bereitstellen des ausgewählten Audiodatenpakets als Ersatz-Audiodatenpaket.

7. Verfahren nach Anspruch 5 oder 6, **dadurch gekennzeichnet, dass** die Anzahl der Bytes, die aus den BL Byte zur Bestimmung der mittleren Pegelhöhe ausgewählt wird, mindestens 25 % von BL beträgt.

8. Verfahren nach einem der Ansprüche 5 bis 7, **dadurch gekennzeichnet, dass** die mittlere Pegelhöhe aus dem Betrag der jeweiligen Pegelhöhen bestimmt wird.

9. Vorrichtung zur automatischen Überwachung von Telefonaten mit mindestens zwei Gesprächspartnern, aufweisend:
- einen Dateneingang (112, 113) der dazu eingerichtet ist, ein digitales Audiodaten-Signal mindestens eines Gesprächspartners zu empfangen, wobei das digitale Audiodaten-Signal durch Komprimierung aus einem analogen Audiodaten-Signal des jeweiligen Gesprächspartners entstanden ist, wobei das digitale Audiodaten-Signal aneinander gereihte digitale Audiodatenpakete mit einer vorgegebenen Länge L aufweist, wobei jedes Audiodatenpaket eine Sequenz aus einer Vielzahl von Bytes darstellt und jedem Byte eine Pegelhöhe zugeordnet ist,
- eine Datenverarbeitungseinrichtung (115), welche dazu eingerichtet ist, das digitale Audiodaten-Signal mindestens eines Gesprächspartners zu verändern, wobei die Datenverarbeitungseinrichtung dazu eingerichtet ist, die nachfolgenden Schritte abschnittsweise für das gesamte digitale Audiodaten-Signal, das N digitale Audiodatenpakete des jeweiligen Gesprächspartners pro Zeiteinheit aufweist, durchzuführen:
- automatisches Auswählen eines vorgegebenen Anteils der N digitalen Audiodatenpakete pro Zeiteinheit in dem jeweiligen Abschnitt,
- automatisches Ersetzen jedes der ausgewählten Audiodatenpakete mit jeweils einem Ersatz-Audiodatenpaket gleicher Länge L, wobei das Ersatz-Audiodatenpaket jeweils
▪ eine gegenüber der Sequenz des jeweils ausgewählten Audiodatenpakets geänderten Reihenfolge der Pegelhöhen oder
▪ die gleiche mittlere Pegelhöhe wie das jeweilige ausgewählte Audiodatenpaket besitzt,
so dass ein informationsreduziertes Audiodaten-Signal entsteht, und
- eine Datenspeichereinrichtung (117), die dazu eingerichtet ist, das jeweilige informationsreduzierte Audiodaten-Signal zu speichern.

10. Vorrichtung nach Anspruch 9, **dadurch gekennzeichnet, dass** die Datenverarbeitungseinrichtung (115) weiter dazu eingerichtet ist, zur Ermittlung des Ersatz-Audiodatenpakets, das ein ausgewähltes Audiodatenpaket mit der Länge L und einer Bytelänge BL ersetzt, die folgenden Schritte auszuführen:
- Auswahl einer vorgegebenen Anzahl der Byte-Positionen I (I₁, I₂, ... I_{PL}) aus der Sequenz des ausgewählten Audiodatenpakets der Bytelänge BL, wobei der Ort der ausgewählten Position(en) im Byte des jeweiligen Audiodatenpakets zufällig oder vorgegeben ist,
wobei für jede ausgewählte Position I
- eine Zufallszahl PZ im Bereich 0 <= PZ < BL bestimmt wird und
- die jeweils zugeordneten Pegelhöhen der Bytes an den Positionen I und I_{PZ} vertauscht werden.

11. Vorrichtung nach Anspruch 10, **dadurch gekennzeichnet, dass** mindestens 70 % der BL Byte des jeweiligen ausgewählten Audiodatenpakets in die Vertauschung der Pegelhöhen einbezogen werden.

12. Vorrichtung nach Anspruch 9, **dadurch gekennzeichnet, dass** die Datenverarbeitungseinrichtung weiter dazu eingerichtet ist, zur Ermittlung des Ersatz-Audiodatenpakets, das ein ausgewähltes Audiodatenpaket mit der Bytelänge BL oder der Länge L ersetzt, die folgenden Schritte auszuführen:
- Bereitstellen einer Matrix enthaltend Ersatz-Audiodatenpakete mit der Bytelänge BL oder der Länge L, wobei jedes Ersatz-Audiodatenpaket aufweist
• eine bestimmte Pegelhöhe aus einer vorgegebenen Anzahl Pegelhöhen und
• eine vorgegebene Frequenz oder ein vorgegebenes Frequenzspektrum,
- Bestimmung der mittleren Pegelhöhe einer vorgegebenen Anzahl von Bytes der BL Bytes des ausgewählten Audiodatenpakets oder des gesamten ausgewählten Audiodatenpakets der Länge L,
- Auswählen desjenigen Audiodatenpakets der Matrix, dessen Pegelhöhe den kleinsten Unterschied zu der mittleren Pegelhöhe des ausgewählten Audiodatenpakets aufweist, und
- Bereitstellen des ausgewählten Audiodatenpakets als Ersatz-Audiodatenpaket.

13. Vorrichtung nach Anspruch 9, **dadurch gekennzeichnet, dass** die Datenverarbeitungseinrichtung weiter dazu eingerichtet ist, zur Ermittlung des Ersatz-Audiodatenpakets, das ein ausgewähltes Audiodatenpaket mit der Bytelänge BL oder der Länge L ersetzt, die folgenden Schritte auszuführen:
- Bereitstellen einer Matrix enthaltend Ersatz-Audiodatenpakete mit der Bytelänge BL oder der Länge L, wobei jedes Ersatz-Audiodatenpaket aufweist
• eine bestimmte Pegelhöhe aus einer vorgegebenen Anzahl von Pegelhöhen und
• eine vorgegebene Frequenz oder ein vorgegebenes Frequenzspektrum aus einer vorgegebenen Anzahl von Frequenzen oder Frequenzspektren,
- Bestimmung der mittleren Pegelhöhe einer vorgegebenen Anzahl von Byte der BL Bytes des ausgewählten Audiodatenpakets oder des gesamten ausgewählten Audiodatenpakets der Länge L,
- Bestimmung der dominantesten Frequenz des ausgewählten Audiodatenpakets,
- Auswählen desjenigen Audiodatenpakets aus der Matrix als Ersatz-Audiodatenpaket, dessen Frequenz oder dessen dominanteste oder mittlere Frequenz des Frequenzspektrums und dessen Pegelhöhe den kleinsten Unterschied zu der dominantesten Frequenz und der mittleren Pegelhöhe des ausgewählten Audiodatenpakets aufweist, und
- Bereitstellen des ausgewählten Audiodatenpakets als Ersatz-Audiodatenpaket.

14. Vorrichtung nach Anspruch 12 oder 13, **dadurch gekennzeichnet, dass** die Anzahl der Byte, die aus den BL Byte zur Bestimmung der mittleren Pegelhöhe ausgewählt wird, mindestens 25 % von BL beträgt.

15. Vorrichtung nach einem der Ansprüche 12 bis 14, **dadurch gekennzeichnet, dass** die mittlere Pegelhöhe aus dem Betrag der jeweiligen Pegelhöhen bestimmt wird.

## Claims

1. A method for automatically monitoring telephone calls with at least two call partners, comprising the following steps:
- receiving a digital audio data signal of at least one call partner, wherein the digital audio data signal has been produced by compression from an analogue audio data signal of the respective call partner, wherein the digital audio data signal comprises a plurality of digital audio data packets of a predetermined length L arranged in a sequential order, wherein each audio data packet represents a sequence of a plurality of bytes and a level height is assigned to each byte,
- modifying the digital audio data signal of at least one call partner, wherein the following steps are carried out sectionwise for the entire digital audio data signal comprising N digital audio data packets of the respective call partner per time unit:
- automatically selecting a predetermined proportion of the N digital audio data packets per time unit in the respective section,
- automatically replacing each of the selected audio data packets with a respective replacement audio data packet of the same length L, wherein the replacement audio data packet
▪ has a modified sequence of level heights compared to the sequence of the respective selected audio data packet or
▪ has the same average level height as the respective selected audio data packet,
so that an information-reduced audio data signal is produced, and
- storing the respective information-reduced audio data signal.

2. The method according to claim 1, **characterised in that** the predetermined proportion of the digital audio data packets which is selected is 100% of N.

3. The method according to any one of the preceding claims, **characterised in that** the following steps are carried out to determine the replacement audio data packet which replaces a selected audio data packet having a length L and a byte length BL:
- selecting a predetermined number of the byte positions I (I₁, I₂, ...I_{PL}) from the sequence of the selected audio data packet of byte length BL, wherein the location of the selected position(s) in the byte of the respective audio data packet is random or predetermined,
wherein for each selected position I
- a random number PZ in the range 0 <= PZ < BL is determined and
- the respectively assigned level heights of the bytes at positions I and I_{PZ} are interchanged.

4. The method according to claim 3, **characterised in that** at least 70% of the BL bytes of the respective selected audio data packet are included in the interchanging of the level heights.

5. The method according to any one of claims 1 and 2, **characterised in that** the following steps are carried out to determine the replacement audio data packet which replaces a selected audio data packet having the byte length BL or the length L:
- providing a matrix comprising replacement audio data packets of byte length BL or length L, wherein each replacement audio data packet comprises
▪ a predetermined level height from a predetermined number of level heights and
▪ a predetermined frequency or a predetermined frequency spectrum,
- determining the average level height of a predetermined number of bytes of the BL bytes of the selected audio data packet or of the entire selected audio data packet of length L,
- selecting the audio data packet of the matrix whose level height has the smallest difference to the average level height of the selected audio data packet, and
- providing the selected audio data packet as a replacement audio data packet.

6. The method according to any one of claims 1 and 2, **characterised in that** the following steps are performed to determine the replacement audio data packet replacing a selected audio data packet having the byte length BL or the length L:
- providing a matrix comprising replacement audio data packets having the byte length BL or the length L, wherein each replacement audio data packet comprises
▪ a predetermined level height from a predetermined number of level heights and
▪ a predetermined frequency or a predetermined frequency spectrum from a predetermined number of frequencies or frequency spectra,
- determining the average level height of a predetermined number of bytes of the BL bytes of the selected audio data packet or of the entire selected audio data packet of length L,
- determining the most dominant frequency of the selected audio data packet,
- selecting that audio data packet from the matrix as a replacement audio data packet whose frequency or whose most dominant or average frequency of the frequency spectrum and whose level height has the smallest difference to the most dominant frequency and to the average level height of the selected audio data packet, and
- providing the selected audio data packet as a replacement audio data packet.

7. The method according to claim 5 or 6, **characterised in that** the number of bytes selected from the BL bytes for determining the average level height is at least 25% of BL.

8. The method according to any one of claims 5 to 7, **characterised in that** the average level height is determined from the absolute value of the respective level heights.

9. An apparatus for automatically monitoring telephone calls with at least two call partners, comprising
- a data input (112, 113) which is configured to receive a digital audio data signal of at least one call partner, wherein the digital audio data signal has been created by compression from an analogue audio data signal of the respective call partner, wherein the digital audio data signal comprises digital audio data packets of a predetermined length L arranged in a sequential order, wherein each audio data packet represents a sequence of a plurality of bytes and a level height is assigned to each byte,
- a data processing unit (115) configured to modify the digital audio data signal of at least one call partner, wherein the data processing unit is configured to perform the following steps sectionwise for the entire digital audio data signal comprising N digital audio data packets of the respective call partner per time unit:
- automatically selecting a predetermined proportion of the N digital audio data packets per unit of time in the respective section,
- automatically replacing each of the selected audio data packets with a respective replacement audio data packet of the same length L, wherein the replacement audio data packet
▪ has a modified sequence of level heights compared to the sequence of the respective selected audio data packet or
▪ has the same average level height as the respective selected audio data packet,
so that an information-reduced audio data signal is produced, and
- a data storage device (117) configured to store the respective information-reduced audio data signal.

10. The apparatus according to claim 9, **characterised in that** the data processing unit (115) is further configured to perform the following steps to determine the replacement audio data packet that replaces a selected audio data packet having the length L and a byte length BL:
- selecting a predetermined number of the byte positions I (I₁, I₂, ...I_{PL}) from the sequence of the selected audio data packet of byte length BL, wherein the location of the selected position(s) in the byte of the respective audio data packet is random or predetermined,
wherein for each selected position I
- a random number PZ in the range 0 <= PZ < BL is determined and
- the respectively assigned level heights of the bytes at positions I and I_{PZ} are interchanged.

11. The apparatus according to claim 10, **characterised in that** at least 70% of the BL bytes of the respective selected audio data packet are included in the interchanging of the level heights.

12. The apparatus according to claim 9, **characterised in that** the data processing unit is further configured to perform the following steps to determine the replacement audio data packet that replaces a selected audio data packet having the byte length BL or the length L:
- providing a matrix comprising replacement audio data packets having the byte length BL or the length L, wherein each replacement audio data packet comprises
• a predetermined level height from a predetermined number of level heights and
• a predetermined frequency or a predetermined frequency spectrum,
- determining the average level height of a predetermined number of bytes of the BL bytes of the selected audio data packet or of the entire selected audio data packet of length L,
- selecting the audio data packet of the matrix whose level height has the smallest difference to the average level height of the selected audio data packet, and
- providing the selected audio data packet as a replacement audio data packet.

13. The apparatus according to claim 9, **characterised in that** the data processing unit is further configured to perform the following steps to determine the replacement audio data packet that replaces a selected audio data packet having the byte length BL or the length L:
- providing a matrix comprising replacement audio data packets having the byte length BL or the length L, wherein each replacement audio data packet comprises
• a predetermined level height from a predetermined number of level heights and
• a predetermined frequency or a predetermined frequency spectrum from a predetermined number of frequencies or frequency spectra,
- determining the average level height of a predetermined number of bytes of the BL bytes of the selected audio data packet or of the entire selected audio data packet of length L,
- determining the most dominant frequency of the selected audio data packet,
- selecting that audio data packet from the matrix as a replacement audio data packet whose frequency or whose most dominant or average frequency of the frequency spectrum and whose level height has the smallest difference to the most dominant frequency and to the average level height of the selected audio data packet, and
- providing the selected audio data packet as a substitute audio data packet.

14. The apparatus according to claim 12 or 13, **characterised in that** the number of bytes selected from the BL bytes for determining the average level height is at least 25% of BL.

15. The apparatus according to any one of claims 12 to 14, **characterised in that** the average level height is determined from the absolute value of the respective level heights.

## Revendications

1. Procédé de surveillance automatique d'appels téléphoniques avec au moins deux interlocuteurs, avec les étapes suivantes :
- recevoir un signal digital de données audio d'au moins un interlocuteur, le signal digital de données audio ayant été formé par compression à partir d'un signal analogue de données audio de l'interlocuteur respectif, le signal digital de données audio comprenant une pluralité de paquets digitaux de données audio agencés les uns derrière les autres avec une longueur prédéterminée L, chaque paquet de données audio représentant une séquence d'une pluralité d'octets et un niveau étant associé à chaque octet,
- modifier le signal digital de données audio d'au moins un interlocuteur, les étapes suivantes étant mises en œuvre par sections pour le signal digital audio qui comprend N paquets digitaux de données audio de l'interlocuteur respectif par unité de temps :
- sélection automatique d'une partie prédéterminée des N paquets digitaux de données audio par unité de temps dans la section respective,
- remplacement automatique de chacun des paquets de données audio sélectionnés par un paquet de remplacement de données audio de même longueur L, le paquet de remplacement de données audio comprenant respectivement
• un ordre des niveaux modifié par rapport à la séquence du paquet respectivement sélectionné de données audio ou
• le même niveau moyen comme le paquet de données audio respectivement sélectionné,
si bien qu'il soit produit un signal de données audio réduit en informations, et
- enregistrer le signal respectif de données audio réduit en informations.

2. Procédé selon la revendication 1, **caractérisé en ce que** la partie prédéterminée des paquets digitaux de données audio, qui est sélectionnée, est de 100 % de N.

3. Procédé selon l'une des revendications précédentes, **caractérisé en ce que**, pour déterminer le paquet de remplacement de données audio qui remplace un paquet de données audio sélectionné ayant la longueur L et une longueur d'octet BL, les étapes suivantes sont mises en œuvre :
- sélection d'un nombre prédéterminé des positions d'octets I (I₁, I₂, ..., I_{PL}) à partir de la séquence du paquet de données audio sélectionné de la longueur d'octet BL, l'endroit de la ou des positions sélectionnées dans l'octet du paquet respectif de données audio étant sélectionné au hasard ou prédéterminé,
pour chaque position sélectionnée I
- un nombre au hasard PZ étant déterminé dans la plage 0 <= PZ < BL et
- les niveaux respectivement associés des octets étant intervertis aux positions I et I_{PZ}.

4. Procédé selon la revendication 3, **caractérisé en ce qu'**au moins 70 % de la longueur d'octet BL du paquet de données audio respectivement sélectionné sont inclus dans la permutation des niveaux.

5. Procédé selon l'une des revendications 1 et 2, **caractérisé en ce que**, pour déterminer le paquet de remplacement de données audio qui remplace un paquet sélectionné de données audio ayant la longueur d'octet BL ou la longueur L, les étapes suivantes sont mises en œuvre :
- mettre à disposition une matrice comprenant des paquets de remplacement de données audio ayant la longueur d'octet BL ou la longueur L, chaque paquet de remplacement de données audio comprenant
• un certain niveau parmi un nombre prédéterminé de niveaux et
• une fréquence prédéterminée ou un spectre de fréquences prédéterminé,
- déterminer le niveau moyen d'un nombre prédéterminé d'octets de la longueur d'octet BL du paquet de données audio sélectionné ou du paquet entier sélectionné de données de la longueur L,
- sélectionner le paquet de données audio de la matrice dont le niveau présente la différence la plus petite du niveau moyen du paquet sélectionné de données audio et
- mettre à disposition le paquet sélectionné de données audio en tant que paquet de remplacement de données audio.

6. Procédé selon l'une des revendications 1 et 2, **caractérisé en ce que**, pour déterminer le paquet de remplacement de données audio qui remplace un paquet sélectionné de données audio ayant la longueur d'octet BL ou la longueur L, les étapes suivantes sont mises en œuvre :
- mettre à disposition une matrice comprenant des paquets de remplacement de données audio ayant la longueur d'octet BL ou la longueur L, chaque paquet de remplacement de données audio comprenant
• un certain niveau parmi un nombre prédéterminé de niveaux et
• une fréquence prédéterminée ou un spectre de fréquences prédéterminé parmi un nombre prédéterminé de fréquences ou de spectres de fréquences,
- déterminer le niveau moyen d'un nombre prédéterminé d'octets de la longueur d'octet BL du paquet de données audio sélectionné ou du paquet entier sélectionné de données audio de la longueur L,
- déterminer la fréquence la plus dominante du paquet sélectionné de données audio,
- sélectionner comme paquet de remplacement de données audio le paquet de données audio de la matrice dont la fréquence ou dont la fréquence la plus dominante ou moyenne du spectre de fréquences et dont le niveau présentent la différence la plus petite de la fréquence la plus dominante et du niveau moyen du paquet sélectionné de données audio, et
- mettre à disposition le paquet sélectionné de données audio en tant que paquet de remplacement de données audio.

7. Procédé selon la revendication 5 ou 6, **caractérisé en ce que** le nombre d'octets qui est sélectionné parmi les longueurs d'octet BL pour déterminer le niveau moyen, est au moins 25 % de la longueur d'octet BL.

8. Procédé selon l'une des revendications 5 à 7, **caractérisé en ce que** le niveau moyen est déterminé à partir du montant des niveaux respectifs.

9. Dispositif de surveillance automatique d'appels téléphoniques avec au moins deux interlocuteurs, comprenant :
- une entrée de données (112, 113) qui est agencée pour recevoir un signal digital de données audio d'au moins un interlocuteur, le signal digital de données audio ayant été formé par compression à partir d'un signal analogue de données audio de l'interlocuteur respectif, le signal digital de données audio comprenant des paquets digitaux de données audio agencés les uns derrière les autres avec une longueur prédéterminée L, chaque paquet de données audio représentant une séquence d'une pluralité d'octets et un niveau étant associé à chaque octet,
- un dispositif de traitement de données (115) qui est agencé pour modifier le signal digital de données audio d'au moins un interlocuteur, le dispositif de traitement de données étant agencé pour mettre en œuvre les étapes suivantes par sections pour le signal digital audio qui comprend N paquets digitaux de données audio de l'interlocuteur respectif par unité de temps :
- sélection automatique d'une partie prédéterminée des N paquets digitaux de données audio par unité de temps dans la section respective,
- remplacement automatique de chacun des paquets de données audio sélectionnés par un paquet de remplacement de données audio de même longueur L, le paquet de remplacement de données audio comprenant respectivement
• un ordre des niveaux modifié par rapport à la séquence du paquet respectivement sélectionné de données audio ou
• le même niveau moyen comme le paquet de données audio respectivement sélectionné,
si bien qu'il soit produit un signal de données audio réduit en informations, et
- un dispositif d'enregistrement de données (117) qui est agencé pour enregistrer le signal respectif de données audio réduit en informations.

10. Dispositif selon la revendication 9, **caractérisé en ce que** le dispositif de traitement de données (115) est agencé en outre, pour déterminer le paquet de remplacement de données audio qui remplace un paquet de données audio sélectionné ayant la longueur L et une longueur d'octet BL, pour mettre en œuvre les étapes suivantes :
- sélectionner un nombre prédéterminé des positions d'octets I (I₁, I₂, ..., I_{PL}) à partir de la séquence du paquet de données audio sélectionné de la longueur d'octet BL, l'endroit de la ou des positions sélectionnées dans l'octet du paquet respectif de données audio étant sélectionné au hasard ou prédéterminé,
pour chaque position sélectionnée I
- un nombre au hasard PZ étant déterminé dans la plage 0 <= PZ < BL et
- les niveaux respectivement associés des octets étant intervertis aux positions I et I_{PZ}.

11. Dispositif selon la revendication 10, **caractérisé en ce qu'**au moins 70 % de la longueur d'octet BL du paquet de données audio respectivement sélectionné sont inclus dans la permutation des niveaux.

12. Dispositif selon la revendication 9, **caractérisé en ce que** le dispositif de traitement de données est agencé en outre, pour déterminer le paquet de remplacement de données audio qui remplace un paquet sélectionné de données audio ayant la longueur d'octet BL ou la longueur L, pour mettre en œuvre les étapes suivantes :
- mettre à disposition une matrice comprenant des paquets de remplacement de données audio ayant la longueur d'octet BL ou la longueur L, chaque paquet de remplacement de données audio comprenant
• un certain niveau parmi un nombre prédéterminé de niveaux et
• une fréquence prédéterminée ou un spectre de fréquences prédéterminé,
- déterminer le niveau moyen d'un nombre prédéterminé d'octets de la longueur d'octet BL du paquet de données audio sélectionné ou du paquet entier sélectionné de données de la longueur L,
- sélectionner le paquet de données audio de la matrice dont le niveau présente la différence la plus petite du niveau moyen du paquet sélectionné de données audio et
- mettre à disposition le paquet sélectionné de données audio en tant que paquet de remplacement de données audio.

13. Dispositif selon la revendication 9, **caractérisé en ce que** le dispositif de traitement de données est agencé en outre, pour déterminer le paquet de remplacement de données audio qui remplace un paquet sélectionné de données audio ayant la longueur d'octet BL ou la longueur L, pour mettre en œuvre les étapes suivantes :
- mettre à disposition une matrice comprenant des paquets de remplacement de données audio ayant la longueur d'octet BL ou la longueur L, chaque paquet de remplacement de données audio comprenant
• un certain niveau parmi un nombre prédéterminé de niveaux et
• une fréquence prédéterminée ou un spectre de fréquences prédéterminé parmi un nombre prédéterminé de fréquences ou de spectres de fréquences,
- déterminer le niveau moyen d'un nombre prédéterminé d'octets de la longueur d'octet BL du paquet de données audio sélectionné ou du paquet entier sélectionné de données audio de la longueur L,
- déterminer la fréquence la plus dominante du paquet sélectionné de données audio,
- sélectionner comme paquet de remplacement de données audio le paquet de données audio de la matrice dont la fréquence ou dont la fréquence la plus dominante ou moyenne du spectre de fréquences et dont le niveau présentent la différence la plus petite de la fréquence la plus dominante et du niveau moyen du paquet sélectionné de données audio, et
- mettre à disposition le paquet sélectionné de données audio en tant que paquet de remplacement de données audio.

14. Dispositif selon la revendication 12 ou 13, **caractérisé en ce que** le nombre d'octets qui est sélectionné parmi les longueurs d'octet BL pour déterminer le niveau moyen, est au moins 25 % de la longueur d'octet BL.

15. Dispositif selon l'une des revendications 12 à 14, **caractérisé en ce que** le niveau moyen est déterminé à partir du montant des niveaux respectifs.
